# EUROPÄISCHE PATENTSCHRIFT

(11) **EP 1 541 404 B1**
(45) Veröffentlichungstag und Bekanntmachung des Hinweises auf die Patenterteilung: **30.04.2008**
(21) Anmeldenummer: 04028827.6
(22) Anmeldetag: 06.12.2004
(51) Int. Cl.: B60K 26/02, G05G 1/14

(54) **Vorrichtung zum Beschleunigen oder Verzögern eines Kraftfahrzeuges**
Device for accelerating or decelerating a motor vehicle
Dispositif pour accélérer ou décélérer une automobile

(30) Priorität: 12.12.2003 DE 10358227
(43) Veröffentlichungstag der Anmeldung: 15.06.2005
(73) Patentinhaber: AUDI AG, 85045 Ingolstadt (DE)
(72) Erfinder: Landsiedel, Thomas, 85110 Kipfenberg (DE)
(74) Vertreter: Thielmann, Frank

(56) Entgegenhaltungen:
- EP-A- 1 139 195
- WO-A-01/25869
- DE-A1- 19 811 268
- US-A- 2 167 959

## Beschreibung

Eine Vorrichtung zum Beschleunigen oder Verzögern eines KFZ weist wenigstens zwei Betätigungselemente auf, wobei mittels eines dieser Betätigungselemente eine Beschleunigung herbeigeführt, die Geschwindigkeit gehalten, oder auch bei Nichtbetätigung aufgrund der Schleppmomente von Motor, Getriebe und Antriebsstrang eine Verzögerung des Kraftfahrzeuges bewirkt werden kann. Ein weiteres Betätigungsmittel dient bei Betätigung zum Abbremsen des Kraftfahrzeuges. Ferner ist es bekannt, aufgrund der Betätigung eines dritten Betätigungselementes, einen Kuppelvorgang zwischen dem Motor und dem Antriebsstrang zu bewirken oder die Kupplung zu trennen.

Aus der DE 198 11 268 A1 ist eine fußbetätigte Bedienvorrichtung für ein Kraftfahrzeug bekannt, das zumindest zwei Betätigungselemente aufweist, die nebeneinander auf einem Bodenblech des Kraftfahrzeuges angeordnet sind. In Abhängigkeit vom Betätigungsweg der Betätigungselemente wird ein Steuersignal erzeugt, das zum einen zur Beeinflussung des Motormomentes und zum anderen zum Bewirken einer Abbremsung des Kraftfahrzeugs herangezogen wird.

Eine aus der EP 1 139 195 A1 bekannte Beschleunigungs- oder Bremspedaleinrichtung weist zwei im Abstand zueinander angeordnete Betätigungselemente auf. Zwischen diesen Betätigungselementen ist eine Fußablage vorgesehen. Die Betätigungselemente, sowie die Fußablage werden von einem vertikalen Tragelement in einem Abstand zum Bodenblech des Kraftfahrzeuges gehalten. In Abhängigkeit von der auf die Betätigungselemente jeweils einwirkenden Kraft ist entweder eine Beschleunigung oder eine Abbremsung des Kraftfahrzeuges bewirkbar.

Aus der WO-A-0125869 (repräsentiert den nächstliegenden bekanntgewordenen Stand der Technik) ist eine verstellbare Konsole bekannt, auf der drucksensitive Pedale als Gas- oder Bremspedale angeordnet sind. Die Konsole ist in Bezug zur Bodenplatte verstellbar, so dass deren Abstand hierzu veränderbar ist.

Aufgabe der vorliegenden Erfindung ist es, eine Vorrichtung der Eingangs genannten Art derart auszuführen, dass diese bei komfortabler Bedienung hohen Sicherheitsanforderungen gerecht wird.

Die Aufgabe wird erfindungsgemäß durch den Gegenstand des Patentanspruchs 1 gelöst.

Weiterbildungen und vorteilhafte Ausgestaltungen der Erfindung ergeben sich aus der nachfolgenden Beschreibung eines Ausführungsbeispiels anhand der Zeichnungen in Verbindung mit den Unteransprüchen.

Es zeigt:
- **Figur 1**: Eine Vorrichtung zum Beschleunigen oder Verzögern eines Kraftfahrzeuges mit wenigstens zwei Betätigungselementen,
- **Figur 2**: eine Vorrichtung nach der Figur 1 mit in unterschiedlichen Ebenen angeordneten Betätigungsflächen der Betätigungselemente,
- **Figur 3**: eine Vorrichtung mit zwischen den Betätigungselementen angeordneter Fußablage und
- **Figur 4**: eine Vorrichtung mit relativ zueinander verstellbaren Betätigungselementen.

In der nachfolgenden Beschreibung der Erfindung anhand der Figuren werden gleiche Elemente mit den gleichen Bezugszahlen versehen.

In den Figuren ist mit dem Bezugszeichen 1 ein Teilbereich eines Bodenbleches eines Kraftfahrzeuges gekennzeichnet, auf dem zumindest ein erstes und ein zweites Betätigungselement 2, 3 angeordnet sind. Diese Betätigungselemente 2, 3 erzeugen, zumindest nahezu weglos ein Ausgangssignal, das von einer auf die Betätigungselemente 2, 3 einwirkenden Kraft abhängt. Das erste Betätigungselement 2 kann beispielsweise dazu dienen, ein Antriebsmoment für das Kraftfahrzeug zu erzeugen. Das Kraftfahrzeug kann somit aufgrund der auf das erste Betätigungselement 2 wirkenden Kraft beschleunigt, es kann die Geschwindigkeit gehalten, oder auch aufgrund von Schleppmomenten, die vom Motor, dem Getriebe und/oder vom Antriebsstrang ausgehen, ein Bremsmoment erzeugt werden. Im allgemeinen Sprachgebrauch kann dieses erste Betätigungselement 2 somit einem "Gaspedal" eines Kraftfahrzeuges entsprechen.

Das zweite Betätigungselement 3 dient in erster Linie dazu, in Abhängigkeit von der auf das zweite Betätigungselement 3 einwirkenden Kraft, ein Bremsmoment zu erzeugen.

Sollte das Kraftfahrzeug mit einem Schaltgetriebe ausgeführt sein, so wäre dann ein drittes Betätigungselement - als Kupplungsbetätigungselement - vorzusehen, durch das eine Kopplung zwischen der Antriebseinrichtung und einem Antriebsrad hergestellt oder diese aufgehoben werden kann.

Durch die direkte Anordnung der Betätigungselemente auf dem Bodenblech ist auch die Verletzungsgefahr, die von einer üblichen Pedalarie bei einem Unfall aus geht, erheblich reduziert.

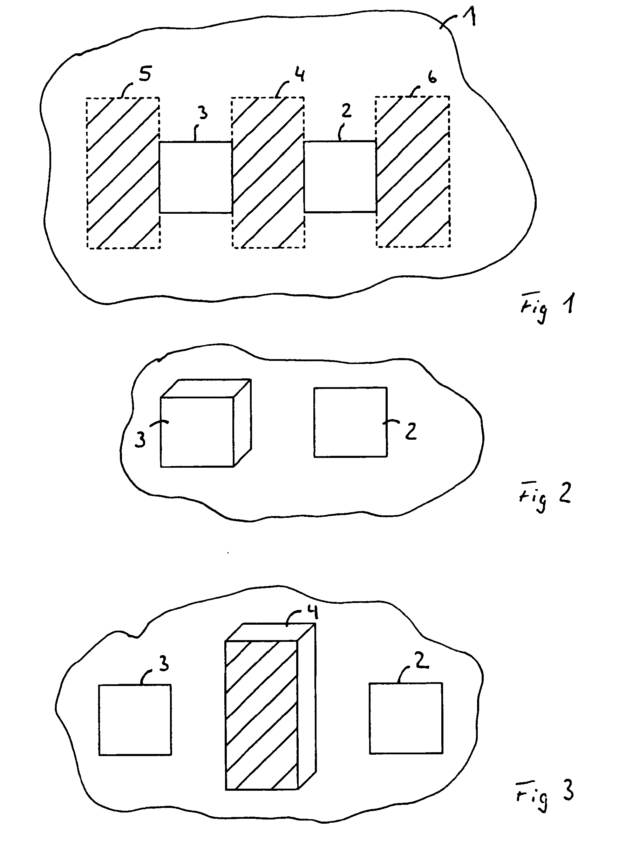

Aus der Figur 1 geht hervor, dass insbesondere zwischen den Betätigungselementen 2, 3 eine Fußablage 4 vorgesehen ist, auf die der rechte oder auch der linke Fuß abgelegt werden kann und die dazu dient, dass eine Orientierung im Fußraum für einen Kraftfahrzeugfahrer möglich ist.

Es ist gezeigt, dass alternativ oder zusätzlich eine weitere Fußablage 5 links neben dem zweiten Betätigungselement 3 und eine dritte Fußablage 6 rechts neben dem ersten Betätigungselement 2 vorgesehen sind. Zur Unterscheidung, ob sich der Fuß auf einem Betätigungselement 2, 3 oder auf einer Fußablage 4, 5, 6 befindet, kann beispielsweise die Oberfläche durch entsprechende Ausgestaltung dienen. Es ist zum Beispiel möglich, die Betätigungsfläche der Betätigungselemente glatt und die der Fußablagen 4,5,6 beispielsweise rau auszubilden. Ferner könnte die Betätigungsfläche der Betätigungselemente 2, 3 von einem Gummibelag und die der Fußablage 4, 5, 6 von einem Teppich gebildet sein.

Zur weiteren Unterscheidung können die Betätigungsfläche der Betätigungselemente 2,3 und/oder die Oberfläche der Fußablage 4, 5, 6 in unterschiedlichen Ebenen angeordnet sein (Fig. 2). Als besonders vorteilhaft erscheint es, wenn die Oberfläche zumindest einer der Fußablagen 4, 5, 6 einen größeren Abstand zum Bodenblech 1 hat als die Betätigungsfläche des ersten und/oder des zweiten Betätigungselementes 2, 3. Eine solche Ausgestaltung geht insbesondere aus der Figur 3 hervor. Hierdurch ergibt sich eine komfortable Bedienbarkeit bei hoher Sicherheit gegen Verwechslung.

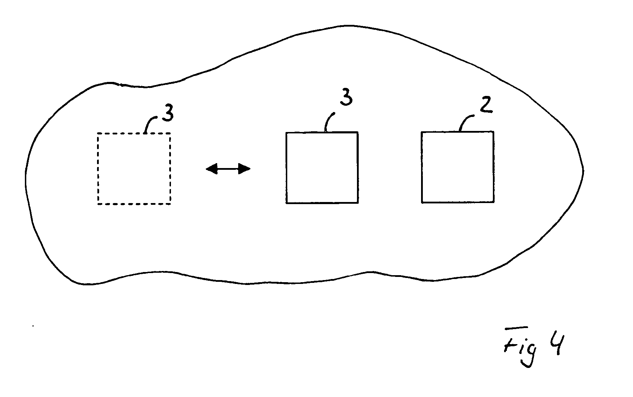

In der Figur 4 ist dargestellt, dass sich die Betätigungselemente 2, 3 sich in einer Positionen befinden können, in der sie auch in herkömmlichen Fahrzeugen angeordnet sind. Im Rahmen der Erfindung kann aber auch zumindest das zweite Betätigungselement 3 eine Position einnehmen, die in gestrichelter Linie dargestellt ist. Hier befindet sich das zweite Betätigungselement 3 dann in einer Position im Bereich des linken Radhauses - Linkslenker Fahrzeug - , beispielsweise da, wo sich bei Fahrzeugen mit Schaltgetriebe die Kupplung befinden würde. Diese relativ große Entfernung zwischen den Betätigungselementen 2, 3 führt zum einen dazu, dass die Verwechslungsgefahr weiter reduziert wird, zum anderen ist es so auch möglich, dass das Fahrzeug sowohl mit dem rechten, als auch mit dem linken Fuß bedient werden kann. Die Position der Betätigungselemente 2, 3 kann im Fahrzeug fest vorgegeben oder sie kann auch variabel sein, wenn hierzu beispielsweise die Betätigungselemente 2, 3 entlang einer Führung verstellbar und in einer gewünschten Position arretierbar sind.
Selbstverständlich ist hierbei schaltungstechnisch ausgeschlossen, dass bei betätigtem zweiten Betätigungselement 3 zusätzlich ein Motormoment aufgrund einer Krafteinwirkung auf das erste Betätigungselement 2 erzeugt wird. Hier hat immer die Erzeugung eines Bremsmomentes Vorrang.

Um die Orientierung weiter zu erleichtern, können die Betätigungselemente 2, 3 mit einer "Knackfrosch" Funktion ausgeführt sein, dass heißt, erst beim Überschreiten einer vorbestimmten Kraft wird ein Ausgangssignal von den Betätigungselementen 2,3 zur Verfügung gestellt. Diese "Knackfrosch" Funktion kann natürlich auch elektronisch bewirkt werden. Demnach erfolgt erst nach Überschreiten einer vorbestimmten oder vorbestimmbaren Signalhöhe eine Auswertung der Ausgangssignale der Betätigungselemente 2,3, die auch unterschiedlich sein kann.

Im Rahmen der Erfindung ist es natürlich auch möglich, dass das zweite Betätigungselement 3 die Funktion des ersten Betätigungselementes 2 und das erste Betätigungselement 2 die Funktion des zweiten Betätigungselementes 3 erfüllt.

## Patentansprüche

1. Vorrichtung zum Beschleunigen oder Verzögern eines Kraftfahrzeuges, mit wenigstens zwei Betätigungselementen (2, 3), die jeweils aufgrund einer einwirkenden Kraft, zumindest nahezu weglos, jeweils ein Ausgangssignal erzeugen, welches zum Beschleunigen, Verzögern und/oder Geschwindigkeit halten herangezogen werden kann,
wobei die Betätigungselemente (2, 3) im Fußraum des Kraftfahrzeuges und in einem Abstand zueinander auf dem Bodenblech (1) angeordnet sind und
mit einer Fußablage (4, 5, 6) die zumindest einem Betätigungselement (2, 3) zugeordnet ist,
wobei die Betätigungselemente (2, 3) erst nach Überwindung einer vorbestimmten Kraft ein Signal erzeugen und/oder
wobei das Signal der Betätigungselemente (2, 3) erst ab einer vorbestimmten Signalhöhe zur Auswertung herangezogen wird.

2. Vorrichtung nach Anspruch 1,
wobei die Betätigungsflächen der Betätigungselemente (2, 3) in unterschiedlichen Ebenen angeordnet sind.

3. Vorrichtung nach Anspruch 1 oder Anspruch 2,
wobei die Fußablage (4, 5, 6) neben dem Betätigungselement (2) zum Erzeugen einer Beschleunigung des Kraftfahrzeugs angeordnet ist.

4. Vorrichtung nach einem der Ansprüche 1 bis 3,
wobei die Fußablage (4) zwischen den Betätigungselementen (2, 3) angeordnet ist.

5. Vorrichtung nach einem der Ansprüche 1 bis 4,
wobei die Oberfläche der Fußablage (4, 5, 6) in einer zu den Betätigungsflächen der Betätigungselemente (2, 3) unterschiedlichen Ebene angeordnet ist.

6. Vorrichtung nach einem der Ansprüche 1 bis 5,
wobei die Oberfläche der Fußablage (4, 5, 6) einen größeren Abstand zum Bodenblech (1) hat, als die Betätigungsflächen der Betätigungselemente (2, 3).

7. Vorrichtung nach einem der Ansprüche 1 bis 6,
wobei der Abstand der Betätigungselemente 2, 3 zueinander veränderbar ist.

8. Vorrichtung nach einem der Ansprüche 1 bis 7,
wobei ein erstes Betätigungselement (2) rechts und das zweite Betätigungselement (3) links in einem dem Kraftfahrzeugfahrer zugeordneten Fußraum des Kraftfahrzeugs angeordnet sind.

9. Vorrichtung nach einem der Ansprüche 1 bis 8,
wobei die Signale der Betätigungselemente (2,3) einer Anlage zum Bewirken einer Beschleunigung bzw. einer Anlage zum Bewirken einer Verzögerung zugeführt werden.

## Claims

1. Device for speeding up or slowing down a motor vehicle, with at least two actuators (2, 3), which each produce an output signal because of an acting force, in an at least almost pathless manner, which may be used to speed up, slow down and/or maintain speed,
in which the actuators (2, 3) are arranged in the foot area of the motor vehicle at a distance from each other on the floor plate (1) and
with a foot rest (4, 5, 6), which is allocated to at least one actuator (2, 3),
in which the actuators (2, 3) produce a signal only after overcoming a predetermined force and/or
in which the signal from the actuators (2, 3) is only used for evaluation from a certain predetermined signal height.

2. Device according to claim 1,
in which the actuating areas of the actuators (2, 3) are arranged at different levels.

3. Device according to claim 1 or claim 2.
in which the foot rest (4, 5, 6) is arranged near the actuator (2) to produce speeding up of the motor vehicle.

4. Device according to one of claims 1 to 3,
in which the foot rest (4) is arranged between the actuators (2, 3).

5. Device according to one of claims 1 to 4,
in which the surface of the foot rest (4, 5 6) is arranged at a different level to the actuating areas of the actuators (2, 3).

6. Device according to one of claims 1 to 5,
in which the surface of the foot rest (4, 5, 6) is at a greater distance from the floor plate (1) than the actuating areas of the actuators (2, 3).

7. Device according to one of claims 1 to 6,
in which the distance of the actuators 2, 3 from each other may be changed.

8. Device according to one of claims 1 to 7,
in which a first actuator (2) is arranged to the right and the second actuator (3) to the left in a foot area of the motor vehicle allocated to the motor vehicle driver.

9. Device according to one of claims 1 to 8,
in which the signals from the actuators (2, 3) are fed to a unit to effect speeding up or a unit to effect slowing down.

## Revendications

1. Dispositif pour accélérer ou décélérer un véhicule, avec au moins deux éléments d'actionnement (2, 3), qui génèrent respectivement un signal de sortie au moins presque sans chemin en raison d'une force d'influence, lequel signal de sortie peut être utilisé pour accélérer, décélérer et/ou maintenir la vitesse, les éléments d'actionnement (2, 3) étant disposés dans le plancher du véhicule et à distance l'un de l'autre sur la plaque au sol (1) et au moins un des éléments d'actionnement (2, 3) est disposé avec un repose-pieds (4, 5, 6), les éléments d'actionnement (2, 3) générant d'abord un signal après avoir surmonté une force prédéfinie et/ou le signal des éléments d'actionnement (2, 3) étant d'abord utilisé pour analyse à partir d'une hauteur de signal prédéfinie.

2. Dispositif selon la revendication 1, dans lequel les surfaces d'actionnement des éléments d'actionnement (2, 3) sont disposées à des niveaux différents.

3. Dispositif selon la revendication 1 ou 2, dans lequel le repose-pieds (4, 5, 6) est disposé à côté de l'élément d'actionnement (2) pour générer une accélération du véhicule.

4. Dispositif selon l'une quelconque des revendications 1 à 3, dans lequel le repose-pieds (4) est disposé entre les éléments d'actionnement (2, 3).

5. Dispositif selon l'une quelconque des revendications 1 à 4, dans lequel la surface du repose-pieds (4, 5, 6) est disposée à un niveau différent par rapport aux surfaces d'actionnement des éléments d'actionnement (2, 3).

6. Dispositif selon l'une quelconque des revendications 1 à 5, dans lequel la surface du repose-pieds (4, 5, 6) est à une plus grande distance de la plaque au sol (1), que les surfaces d'actionnement des éléments d'actionnement (2, 3).

7. Dispositif selon l'une quelconque des revendications 1 à 6, dans lequel la distance entre les éléments d'actionnement (2, 3) est modifiable.

8. Dispositif selon l'une quelconque des revendications 1 à 7, dans lequel un premier élément d'actionnement (2) est disposé à droite et le second élément d'actionnement (3) est disposé à gauche dans le plancher du conducteur du véhicule.

9. Dispositif selon l'une quelconque des revendications 1 à 8, dans lequel les signaux des éléments d'actionnement (2, 3) sont amenés à une position pour entraîner une accélération ou à une position pour entraîner une décélération.
